# FASCICULE DE BREVET EUROPEEN

(11) **EP 2 445 759 B1**
(45) Date de publication et mention de la délivrance du brevet: **28.08.2013**
(21) Numéro de dépôt: 10745296.3
(22) Date de dépôt: 22.06.2010
(51) Int. Cl.: B60R 21/01

(54) **DISPOSITIF DE DÉTECTION D'OBSTACLES COMPORTANT UN SYSTÈME DE RESTITUTION SONORE**
HINDERNISERKENNUNGSVORRICHTUNG MIT EINEM KLANGWIEDERGABESYSTEM
OBSTACLE DETECTION DEVICE COMPRISING A SOUND REPRODUCTION SYSTEM

(30) Priorité: 22.06.2009 FR 0954222
(43) Date de publication de la demande: 02.05.2012
(73) Titulaire: Institut Français des Sciences et Technologies des Transports, de l'Aménagement et des Réseaux, 77420 Champs sur Marne (FR)
(72) Inventeur: TATKEU, Charles, F-59320 Haubourdin (FR); PHAM, Tuyên, F-59800 Lille (FR); RIVENQ-MENHAJ, Atika, F-59269 Artres (FR); NIAR, Smail, F-59300 Aulnoy (FR); GREFF, Raphaël, F-59120 Loos (FR); EL HILLALI, Yassin, F-59300 Valenciennes (FR)
(74) Mandataire: Thibault, Jean-Marc
(86) Numéro de dépôt international: PCT/FR2010/051271
(87) Numéro de publication internationale: WO 2010/149927

(56) Documents cités:
- WO-A-2006/029725
- DE-A1- 10 020 744
- FR-A- 2 852 779
- FR-A- 2 873 841
- FR-A- 2 898 986

## Description

La présente invention a pour objet un dispositif de détection d'obstacles comportant un système de restitution sonore.

Le document FR 2 873 841 décrit un dispositif de détection d'obstacle pour véhicule, comportant un ensemble de capteurs, une unité de traitement de signal et un système de restitution sonore, les capteurs étant positionnés dans les pare-chocs pour permettre une détection des obstacles présents devant ou derrière le véhicule.

Plusieurs études ont été menées pour développer des dispositifs de détection d'obstacles, notamment en vue de founiir une aide à la conduite et au stationnement de véhicules. On peut citer, par exemple, les projets européens Carsense, Adase 2, Prosper, Prevent-ip Compose, Safespot, CoMeSafety et Arcos. Cependant, ces études présentent l'inconvénient de ne pas considérer les obstacles, donc les dangers potentiels, qui se trouvent sur les côtés et/ou dans les angles morts du véhicule.

Des dispositifs de détection et/ou de suivi d'obstacles sont également utilisés dans des applications militaires et dans l'aviation. Cependant, les dispositifs utilisés présentent l'inconvénient d'être extrêmement couteux, ce qui les rend inadaptés à une utilisation dans le domaine du grand public. De plus, ces dispositifs possèdent des caractéristiques techniques limitées du fait de la puissance de calcul nécessaire, et génèrent un nombre élevé de fausses alarmes.

Lorsqu'un danger est détecté, les dispositifs de détection d'obstacles connus peuvent émettre une alarme sonore (comme, par exemple, les radars de recul), ou agir directement sur des systèmes de commande du véhicule (par exemple sur les freins pour commander un freinage automatique).

Aujourd'hui, le développement des capteurs, et des capacités de calcul permettant d'analyser les données de mesure transmises par ces capteurs, permet de mieux appréhender l'espace autour d'un véhicule. Il ne s'agit plus seulement de pouvoir détecter un obstacle situé à l'avant du véhicule lorsque le véhicule avance ou à l'arrière lorsque le véhicule recule, mais de pouvoir détecter l'ensemble des obstacles présents dans l'environnement du véhicule. Dans cette problématique, il est difficile pour le dispositif de détection d'obstacles de prendre des décisions à la place du conducteur et il devient alors nécessaire de pouvoir avertir efficacement le conducteur d'un danger potentiel.

La présente invention a pour but de proposer un dispositif de détection d'obstacles qui évite au moins certains des inconvénients précités, et qui permette d'avertir rapidement et efficacement le conducteur d'un véhicule de la détection d'un danger potentiel.

A cet effet, l'invention a pour objet un dispositif de détection d'obstacles pour véhicule, comportant un ensemble de capteurs, une unité de traitement du signal et un système de restitution sonore, les capteurs dudit ensemble de capteurs étant positionnés pour permettre une détection des obstacles présents tout autour dudit véhicule, caractérisé en ce que ledit système de restitution sonore comporte un moteur de son 3D, ledit système de restitution sonore étant apte à générer et à émettre un signal sonore spatialisé, qui est perçu par le conducteur dudit véhicule comme en provenance d'un obstacle détecté constituant un danger potentiel.

Avantageusement, un desdits capteurs est choisi parmi un radar, un lidar, une caméra et un système à ultrasons.

Avantageusement, ledit système de restitution sonore comporte un ensemble de haut-parleurs.

Selon un mode de réalisation de l'invention, ledit ensemble de haut-parleurs comporte au moins deux haut-parleurs.

Selon un autre mode de réalisation de l'invention, ledit ensemble de haut-parleurs comporte quatre haut-parleurs disposés respectivement dans les quatre portes dudit véhicule.

De préférence, le dispositif de détection d'obstacles comprend une interface permettant une configuration par un utilisateur.

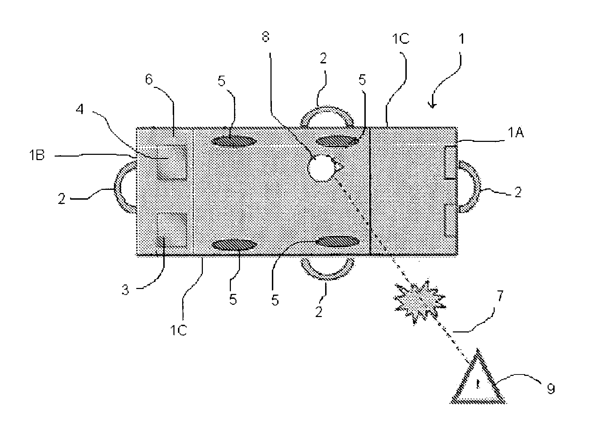

L'invention sera mieux comprise, et d'autres buts, détails, caractéristiques et avantages de celle-ci apparaîtront plus clairement au cours de la description explicative détaillée qui va suivre, d'un mode de réalisation de l'invention donné à titre d'exemple purement illustratif et non limitatif, en référence au dessin schématique annexé.

Ce dessin est une vue schématique simplifiée d'un véhicule équipé d'un dispositif de détection d'obstacles selon un mode de réalisation de l'invention.

En se référant à la figure, on voit un véhicule 1, par exemple une voiture, équipé d'un dispositif de détection d'obstacles. Le dispositif de détection d'obstacles comporte un ensemble de capteurs 2, une unité de traitement du signal 3 et un système de restitution sonore 4,5.

Les capteurs 2 sont respectivement positionnés à l'avant 1A, à l'arrière 1B, et sur les côtés 1C du véhicule 1, de manière à permettre une détection de tous les obstacles présents autour du véhicule 1. Un capteur 2 peut être de type quelconque, par exemple radar (longue ou courte portée, à bande étroite ou large bande), lidar, caméra, système à ultrasons, ou autre. L'ensemble de capteurs 2 peut comprendre des capteurs 2 de différents types.

Les capteurs 2 sont reliés à l'unité de traitement du signal 3 et au système de restitution sonore 4, 5.

L'unité de traitement du signal 3 est par exemple disposée dans le coffre 6 du véhicule 1.

Le système de restitution sonore comporte un moteur de son 3D 4, qui est par exemple disposé dans le coffre 6 du véhicule 1, et un ensemble de haut-parleurs 5, par exemple quatre haut-parleurs 5 disposés respectivement dans les quatre portes du véhicule 1. En variante, les haut-parleurs 5 peuvent être disposés à un endroit quelconque du véhicule, notamment lorsque le véhicule ne comporte que deux portes. En outre, on notera que deux haut-parleurs suffisent pour restituer un son 3D. En conséquence, en variante, l'ensemble de haut-parleurs 5 peut comporter deux haut-parleurs ou plus.

On va maintenant décrire le fonctionnement du dispositif de détection d'obstacles.

Lorsque le dispositif de détection d'obstacles est mis en marche, les capteurs 2 réalisent des mesures pour détecter les obstacles présents dans l'environnement du véhicule 1. Les signaux de mesures sont transmis à l'unité de traitement du signal 3.

L'unité de traitement du signal 3 traite en temps réel les signaux de mesure reçus des capteurs 2 pour en extraire des informations pertinentes relatives à chaque obstacle détecté. Les informations pertinentes associées à un obstacle sont, par exemple, la nature, la distance et la position de l'obstacle par rapport au véhicule. Le procédé de traitement effectué par l'unité de traitement 3 comprend par exemple une étape de filtrage et/ou des étapes de suivi (« tracking ») des obstacles. Puis, l'unité de traitement 3 transmet un signal d'information contenant les infonnations pertinentes au moteur de son 4. De préférence, le signal d'information est codé par multiplexage, c'est-à-dire que les signaux de mesure sont codés selon la direction de l'obstacle correspondant.

A partir du signal d'information reçu, le moteur de son 4 calcule et génère les signaux d'alarme à envoyer aux haut-parleurs 5. Pour cela, le moteur de son 4 utilise des techniques binaurales similaires à celles utilisées pour améliorer le son des systèmes stéréo dans les véhicules. En effet, le son dans ce type de lieu acoustique est fortement déformé à cause des réflexions multiples dans l'habitacle. De plus, pour une écoute stéréo idéale, l'auditeur doit se trouver à équidistance des haut-parleurs. Ceci est rarement le cas dans un habitacle de voiture où les haut-parleurs disposés dans les habillages de portes sont placés de façon asymétriques par rapport au conducteur. Des mesures binaurales au niveau du conducteur et des techniques d'inversion numérique de filtres permettent de corriger ces défauts et d'effectuer des égalisations spatiales afin de recréer un espace sonore virtuel stéréo idéal. Ces techniques, décrites par des recherches menées par exemple par l'institut d'ingénierie industrielle de Parme (Pr. Angelo Farina) sont également commercialisées par des sociétés (SRS, Arkamys). Ici, les signaux d'alarme doivent permettre l'émission d'un signal sonore spatialisé. En d'autres termes, le moteur de son 4 calcule des signaux d'alarme correspondant à un signal sonore émis par une source virtuelle située au niveau de l'obstacle constituant un danger potentiel.

Ensuite, le moteur de son 4 transmet les signaux d'alarme aux haut-parleurs 5.

En réponse à la réception des signaux d'alarme, les haut-parleurs 5 émettent une alarme sonore, qui est perçue par le conducteur 8 comme en provenance de l'obstacle 9 constituant un danger potentiel, comme cela est symbolisé par le trait pointillé 7.

L'avantage de l'émission d'un signal sonore spatialisé est de transmettre, dans un laps de temps très court, la nature du danger, par le signal sonore en lui-même, et la direction du danger, par la localisation spatiale d'une source virtuelle par rapport au conducteur.

Le dispositif de détection d'obstacles est particulièrement adapté à une utilisation dans le domaine des transports terrestres (véhicule à deux roues, voitures, bus, poids lourds, tramway). Il peut être couplé à un système de communication inter-véhicules, et/ou à un système d'aide à la conduite manuelle ou automatique, pour permettre une action automatique sur des organes du véhicule.

Le dispositif de détection d'obstacles peut également être utilisé dans le domaine des transports maritimes et les applications fluviales, en particulier pour faciliter les manoeuvres dans les zones délicates, en cas de conditions météorologiques difficiles, ou dans les ports et estuaires.

Notamment, la restitution sonore peut être utilisée en complément ou en substitution d'une restitution visuelle, afin d'avertir plus facilement (restitution sonore), plus rapidement et plus efficacement (information de localisation) un pilote ou conducteur lorsqu'un danger est détecté.

Le dispositif de détection d'obstacles peut comprendre une interface permettant une configuration par un utilisateur.

Les haut-parleurs peuvent être remplacés par des moyens de restitution audio quelconques, par exemple un casque.

Bien que l'invention ait été décrite en relation avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif de détection d'obstacles pour véhicule (1), comportant un ensemble de capteurs (2), une unité de traitement du signal (3) et un système de restitution sonore (4,5), les capteurs (2) dudit ensemble de capteurs étant positionnés pour permettre une détection des obstacles présents tout autour dudit véhicule (1), **caractérisé en ce que** ledit système de restitution sonore comporte un moteur de son 3D (4), ledit système de restitution sonore étant apte à générer et à émettre un signal sonore spatialisé, qui est perçu par le conducteur dudit véhicule (1) comme en provenance d'un obstacle (9) détecté constituant un danger potentiel.

2. Dispositif de détection d'obstacles selon la revendication 1, **caractérisé en ce qu'**un desdits capteurs (2) est choisi parmi un radar, un lidar, une caméra et un système à ultrasons.

3. Dispositif de détection d'obstacles selon la revendication 1, **caractérisé en ce que** ledit système de restitution sonore comporte un ensemble de haut-parleurs (5).

4. Dispositif de détection d'obstacles selon la revendication 3, **caractérisé en ce que** ledit ensemble de haut-parleurs (5) comporte au moins deux haut-parleurs (5).

5. Dispositif de détection d'obstacles selon la revendication 3, **caractérisé en ce que** ledit ensemble de haut-parleurs (5) comporte quatre haut-parleurs (5) disposés respectivement dans les quatre portes dudit véhicule (1).

6. Dispositif de détection d'obstacles selon la revendication 1, **caractérisé en ce qu'**il comprend une interface permettant une configuration par un utilisateur.

## Patentansprüche

1. Hinderniserkennungsvorrichtung für Fahrzeug (1), die eine Einheit von Sensoren (2), eine Signalverarbeitungseinheit (3) und ein Klangwiedergabesystem (4, 5) aufweist, wobei die Sensoren (2) der Einheit von Sensoren dazu angeordnet sind, eine Erfassung der Hindernisse zu erlauben, die um das Fahrzeug (1) herum vorhanden sind, **dadurch gekennzeichnet, dass** das Klangwiedergabesystem eine 3D-Klangerzeugung (4) aufweist, wobei das Klangwiedergabesystem dazu ausgelegt ist, ein räumliches Schallsignal zu erzeugen und zu senden, das von dem Fahrer des Fahrzeugs (1) als von einem erfassten Hindernis (9), das eine potentielle Gefahr darstellt, ausgehend wahrgenommen wird.

2. Hinderniserkennungsvorrichtung nach Anspruch 1, **dadurch gekennzeichnet, dass** einer der Sensoren (2) ausgewählt ist aus einem Radar, einem Lidar, einer Kamera und einem Ultraschallsystem.

3. Hinderniserkennungsvorrichtung nach Anspruch 1, **dadurch gekennzeichnet, dass** das Klangwiedergabesystem eine Lautsprechereinheit (5) aufweist.

4. Hinderniserkennungsvorrichtung nach Anspruch 3, **dadurch gekennzeichnet, dass** die Lautsprechereinheit (5) mindestens zwei Lautsprecher (5) aufweist.

5. Hinderniserkennungsvorrichtung nach Anspruch 3, **dadurch gekennzeichnet, dass** die Lautsprechereinheit (5) vier Lautsprecher (5) aufweist, die jeweils in den vier Türen des Fahrzeugs (1) angeordnet sind.

6. Hinderniserkennungsvorrichtung nach Anspruch 1, **dadurch gekennzeichnet, dass** sie eine Schnittstelle aufweist, die eine Konfiguration durch einen Benutzer erlaubt.

## Claims

1. A device for detecting obstacles for a vehicle (1), including a set of sensors (2), a unit for professing the signal (3) and a sound reproduction system (4, 5), the sensors (2) of said set of sensors being positioned in order to allow defection of the obstacles present all aground said vehicle (1), **characterized in that** said sound reproduction system includes a 3D sound engine (4), said sound reproduction system being capable of generating and of emitting a spatialized sound signal, which is perceived by the driver of said vehicle (1) as stemming from a detected obstacle (9) worming a potential hazard.

2. The obstacle detection device according to claim 1, **characterized in that** one of said sensors (2) is selected from a radar, a lidar, a caméra and an ultrasound system.

3. The obstacle detection device according to claim 1, **characterized in that** said sound reproduction system includes a set of loudspeakers (5).

4. The obstacle detection device according to claim 3, **characterized in that** said set of loudspeakers (5) includes at least the two loudspeakers (5).

5. The obstacle detection device according to claim 3, **characterized in that** said set of loudspeakers (5) includes four loudspeakers (5) respectively positioned in the four doors of said vehicle (1).

6. The obstacle detection device according to claim 1, **characterized in that** it comprises an interface allowing configuration by a user.
